# EUROPÄISCHE PATENTANMELDUNG

(11) **EP 2 200 175 A1**
(43) Veröffentlichungstag der Anmeldung: **23.06.2010**
(21) Anmeldenummer: 08172383.5
(22) Anmeldetag: 19.12.2008
(51) Int. Cl.: H02P 23/00, G05B 19/404

(54) **Vorrichtung und Verfahren zur Minimierung eines dynamischen Schleppfehlers**

(71) Anmelder: Siemens Aktiengesellschaft, 80333 München (DE)
(72) Erfinder: Forster, Gerhard, 90592, Schwarzenbruck (DE); Thoma, Rainer, 96172, Mühlhausen (DE); Hennefelder, Thomas, 91484, Markt Sugenheim (DE)

(57) **Zusammenfassung**

Die Erfindung betrifft eine Vorrichtung und ein Verfahren zur Minimierung eines durch eine periodische Störgröße verursachten Schleppfehlers (Δx) eines Lageregelkreises (6). Um den Schleppfehler zu minimieren, werden folgende Verfahrensschritte vorgeschlagen:
- Messung einer mit der Störgröße beaufschlagten Messgröße (1),
- Bestimmung einer ersten Amplitude (A₀...Aₙ) und eines ersten Phasenwinkels (ϕ₀...ϕₙ) für zumindest einen Frequenzanteil (f₀...fₙ) der Störgröße,
- Bestimmung eines Vorsteuersignals (5), das bei dem Frequenzanteil (f₀...fₙ) eine zur ersten Amplitude (A₀...Aₙ) proportionale zweite Amplitude und einen bezüglich dem ersten Phasenwinkel (ϕ₀...ϕₙ) verschobenen zweiten Phasenwinkel aufweist derart, dass das Vorsteuersignal den Schleppfehler (Δx) reduziert, und
- Aufschalten des Vorsteuersignals (5) auf eine Sollgröße des Lageregelkreises (6).

## Beschreibung

Die Erfindung betrifft eine Vorrichtung und ein Verfahren zur Minimierung eines durch eine periodische Störgröße verursachten Schleppfehlers eines Lageregelkreises.

Die Erfindung kommt beispielsweise bei der Regelung von Produktionsmaschinen oder numerisch gesteuerten Werkzeugmaschinen zum Einsatz.

Insbesondere bei Produktionsmaschinen wie Verpackungsmaschinen, Druckmaschinen, Pressen, Spritzgussmaschinen etc. treten häufig Störmomente oder Störkräfte während des Produktionsprozesses auf, die nicht schon bei der Projektierung der Maschine bekannt sind. Die Regelkreise derartiger Maschinen unterliegen daher schwer abschätzbaren Störungen, die eine stabile Lageregelung erschweren.

Bei Werkzeugmaschinen wird auf Basis eines sogenannten Teileprogramms ein Werkstück computergesteuert bearbeitet. Ein elektrischer Antrieb steuert hierbei entlang einer vorprogrammierten Werkzeugbahn ein zur Bearbeitung des Werkstücks vorgesehenes Werkzeug. Die durch das Teileprogramm vorgegebene Lage des Werkzeugs muss dabei in jedem Betriebszustand möglichst exakt eingehalten werden, um eine optimale Bearbeitungsqualität zu erzielen.

Zur Steuerung von Produktions- und Werkzeugmaschinen kommen in der Regel kaskadierte Regelkreise zum Einsatz. Ein äußerer Regelkreis wird hierbei von einem Lageregler gebildet, der zur Regelung einer vorgegebenen Lage bzw. Position vorgesehen ist. Dem Lageregler ist ein Drehzahlregler unterlagert, dem schließlich ein Stromregler unterlagert ist, der den Strom eines elektrischen Antriebs der Maschine regelt.

Bei jedem Bearbeitungsprozess können Störmomente oder Störkräfte entstehen, die zu einer Abweichung der tatsächlichen Lage von dem Sollwert der Lage führen. Es kommt dadurch zu einem sogenannten Schleppfehler, unter dem man die Differenz zwischen dem Lagesollwert und dem Lageistwert versteht. Dieser Schleppfehler umfasst in der Regel einen periodischen Anteil. Häufig kann ein solcher periodisch schwankender Schleppfehler nicht durch die kaskadierte Antriebsregelung der Maschine zufriedenstellend ausgeglichen werden.

Bisher wurde versucht, das Problem des schwankenden Schleppfehlers durch eine manuelle oder automatische Optimierung der Regelungsparameter des Strom-, Drehzahl- und Lagereglers zu lösen. Da die Störmomente bzw. Störgrößen u.U. Resonanzen in der Mechanik des Antriebsstrangs hervorrufen können, werden häufig Strom- und/oder Drehzahlsollwertfilter eingesetzt, um diese Resonanzüberhöhungen zu unterbinden.

Aus der DE 10 2006 006 162 A1 ist eine Reglerstruktur zur Lageregelung eines Objektes bekannt, bei der aus dem Lagesollwert ein Vorsteuerstrom berechnet wird, der dem Stromsollwert der kaskadischen Reglerstruktur aufgeschaltet wird. Dieser Vorsteuerstrom wird außerdem einem Modell zur Torsionsvorsteuerung aufgeschaltet, dessen Ausgangssignal auf den Drehzahlsollwert aufgeschaltet ist. Das Modell zur Torsionsvorsteuerung besteht aus einem Differenzierer zum Bilden der ersten Ableitung des Vorsteuerstromes sowie einem zweiten Multiplizierer, in dem diese erste Ableitung des Vorsteuerstromes mit einem Faktor multipliziert wird.

Der Erfindung liegt die Aufgabe zugrunde, einen durch periodische Störgrößen verursachten Schleppfehler eines Lageregelkreises zu minimieren.

Diese Aufgabe wird durch ein Verfahren zur Minimierung eines durch eine periodische Störgröße verursachten Schleppfehlers eines Lageregelkreises gelöst mit folgenden Verfahrensschritten:
- Messung einer mit der Störgröße beaufschlagten Messgröße,
- Bestimmung einer ersten Amplitude und eines ersten Phasenwinkels für zumindest einen Frequenzanteil der Störgröße,
- Bestimmung eines Vorsteuersignals, das bei dem Frequenzanteil eine zur ersten Amplitude proportionale zweite Amplitude und einen bezüglich dem ersten Phasenwinkel verschobenen zweiten Phasenwinkel aufweist derart, dass das Vorsteuersignal den Schleppfehler reduziert, und
- Aufschalten des Vorsteuersignals auf eine Sollgröße des Lageregelkreises.

Ferner wird die Aufgabe durch eine Vorrichtung gelöst zur Minimierung eines durch eine periodische Störgröße verursachten Schleppfehlers eines Lageregelkreises, wobei die Vorrichtung
- Mittel zur Messung einer mit der Störgröße beaufschlagten Messgröße,
- Mittel zur Bestimmung einer ersten Amplitude und eines ersten Phasenwinkels für zumindest einen Frequenzanteil der Störgröße,
- Mittel zur Bestimmung eines Vorsteuersignals, das bei dem Frequenzanteil eine zur ersten Amplitude proportionale zweite Amplitude und einen bezüglich dem ersten Phasenwinkel verschobenen zweiten Phasenwinkel aufweist derart, dass das Vorsteuersignal den Schleppfehler reduziert, und
- Mittel zum Aufschalten des Vorsteuersignals auf eine Sollgröße des Lageregelkreises
aufweist.

Ebenso wird die Aufgabe durch ein Computerprogrammprodukt enthaltend Programmcodemittel zur Ausführung des oben genannten Verfahrens gelöst, wenn besagtes Computerprogrammprodukt auf einem Datenverarbeitungssystem ausgeführt wird.

Die Erfindung macht sich das Prinzip der Vorsteuerung zu nutze, wodurch ein schnelleres Einregeln der gewünschten Lage und eine robustere Auslegung des kaskadierten Regelkreises erzielt werden kann.

Der Erfindung liegt die Erkenntnis zugrunde, dass bei einer periodischen Störgröße das geeignete Vorsteuersignal sehr einfach im Frequenzbereich ermittelt werden kann. Erfindungsgemäß wird daher zunächst eine Messgröße des Regelkreises erfasst, die bekanntermaßen mit der Störgröße beaufschlagt ist. Nach einer Transformation dieses Messsignals in den Frequenzbereich werden zunächst zumindest für einen Frequenzanteil, in der Regel jedoch für alle signifikanten Frequenzanteile der Störgröße, eine erste Amplitude und ein erster Phasenwinkel des Störsignals ermittelt.

Um nun den Frequenzanteil mit dieser ersten Amplitude und diesem ersten Phasenwinkel zu kompensieren, wird ein Vorsteuersignal bestimmt, welches eine zur ersten Amplitude proportionale Amplitude besitzt und einen bezüglich des ersten Phasenwinkels verschobenen zweiten Phasenwinkel aufweist. Die Phasenverschiebung zwischen dem ersten und zweiten Phasenwinkel wird dabei derart gewählt, dass bei einer Aufschaltung des Vorsteuersignals eine Minimierung des Schleppfehlers erzielt wird.

Die Aufschaltung des Vorsteuersignals geschieht auf eine der Sollgrößen, die in dem kaskadierten Lageregelkreis geregelt wird. Dies kann beispielsweise der Lagesollwert, der Drehmomentsollwert oder auch der Stromsollwert sein.

Vorteilhafte Ausgestaltungsformen der Erfindung ergeben sich aus den Unteransprüchen sowie den nachfolgenden Ausführungen.

Die oben beschriebene Auswertung der auf dem Antrieb wirkenden Störgröße durch Analyse der Spektralkomponenten eines Signales, welches diese Störung repräsentiert, kann in vorteilhafter Ausgestaltung der Erfindung sehr einfach erreicht werden, wenn das Messsignal insbesondere mittels einer Fouriertransformation in den Frequenzbbereich transformiert wird, um die erste Amplitude und den ersten Phasenwinkel zu bestimmen, und das Vorsteuersignal in den Zeitbereich mittels einer inversen Fouriertransformation transformiert wird, bevor es um eine oder mehrere Perioden versetzt auf eine Sollgröße des Lageregelkreises aufgeschaltet wird. Insbesondere bei einer Durchführung des Verfahrens mittels eines digitalen Signalprozessors, Mikrocontrollers etc. ist es zweckmäßig, die diskrete Fouriertransformation (DFT) oder hierauf basierende optimierte Algorithmen hierfür einzusetzen.

Um die Entstehung von Spiegelfrequenzen bei der Transformation des Messsignals in den Frequenzbereich zu vermeiden, ist eine Ausgestaltung der Erfindung vorteilhaft, bei der das Messsignal vor der Bestimmung der ersten Amplitude und des ersten Phasenwinkels mit einem Tiefpassfilter gefiltert wird. Hierbei kann es zweckmäßig sein, den Tiefpassfilter steilflankig auszulegen, um den gewünschten Effekt zu verstärken.

Den geringsten Aufwand stellt eine Ausführungsform der Erfindung dar, bei der der Schleppfehler als Messsignal verwendet wird. Mit teilweise etwas höherem Aufwand können jedoch auch der Drehmomentistwert, Drehmomentsollwert, Stromistwert, Stromsollwert oder der Drehzahlfehler, d.h. die Abweichung der Solldrehzahl von der Istdrehzahl, als Messsignal verwendet werden.

Um die gewünschte Erhöhung der Stabilität der Lageregelung zu erzielen, ist eine Ausführungsform der Erfindung vorteilhaft, bei der das Vorsteuersignal auf ein Solldrehmoment des elektrischen Antriebes aufaddiert wird. Alternativ sind aber auch Ausführungsformen der Erfindung denkbar, bei der das Vorsteuersignal auf einen Sollstrom eines Stromrichters des elektrischen Antriebes oder auf eine Solldrehzahl des elektrischen Antriebes aufaddiert wird. Schließlich ist auch eine Ausführungsform denkbar und von der Erfindung umfasst, bei der das Vorsteuersignal auf einen Lagesollwert für eine zu regelnde Lage aufaddiert wird.

Mögliche Schäden am Antriebssystem können in vorteilhafter Ausgestaltung der Erfindung dadurch vermieden werden, dass die zweite Amplitude begrenzt wird. Alternativ oder zusätzlich kann vorteilhafterweise auch die Änderung der zweiten Amplitude begrenzt werden.

Eine besonders vorteilhafte Ausgestaltung der Erfindung kennzeichnet sich dadurch, dass ein Startwert für das Vorsteuersignal in einer Betriebsphase des elektrischen Antriebs bestimmt und gespeichert wird und wobei der gespeicherte Startwert bei einem Neustart des elektrischen Antriebs auf die Sollgröße des Lageregelkreises aufgeschaltet wird. Auf diese Weise kann die Genauigkeit des Antriebs schon direkt bei dem Neustart des Antriebs positiv durch Vorsteuerung beeinflusst werden, obwohl noch keine Messung der mit der Störgröße beaufschlagten Messgröße in der dem Neustart folgenden Betriebsphase vorliegen kann. Der Startwert kann auch durch eine Messung beispielsweise bei einer Inbetriebsetzung des elektrischen Antriebs bestimmt werden.

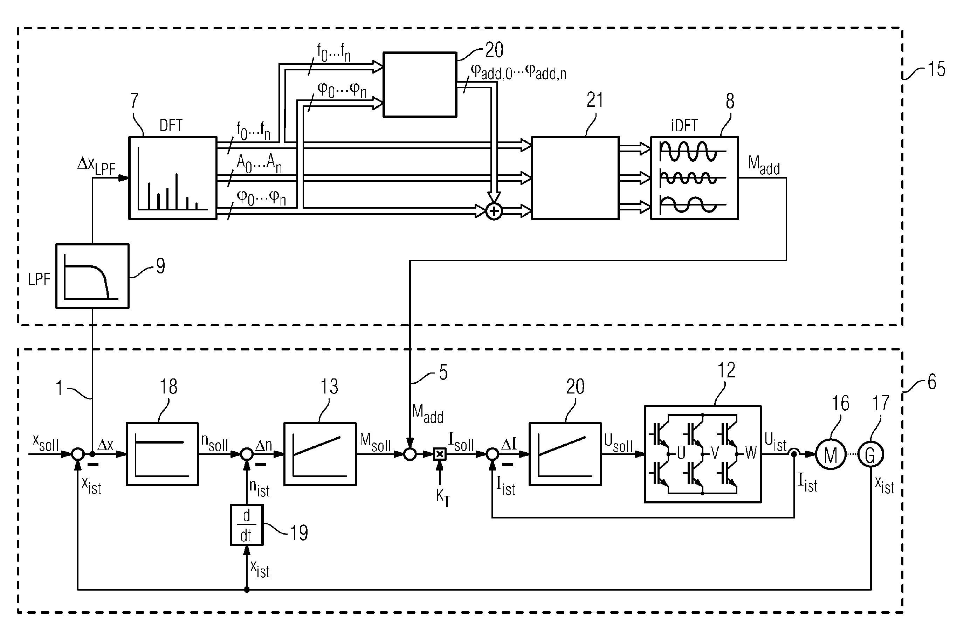

Im Folgenden wird die Erfindung anhand des in der Figur dargestellten Ausführungsbeispiels näher beschrieben und erläutert.

Die Figur zeigt einen konventionellen Lageregelkreis 6, der um eine Störgrößenaufschaltung 15 gemäß einer Ausführungsform der Erfindung erweitert wird. Mit dem dargestellten Lageregelkreis 6 wird letztendlich in Abhängigkeit eines Lagesollwerts xₛₒₗₗ eine Klemmenspannung für einen Elektromotor 16 erzeugt, der eine Achse eines Antriebes einer Produktionsmaschine ansteuert. Der Elektromotor 16 kann sowohl als rotatorischer Elektromotor als auch als Linearmotor ausgeführt sein. Der Elektromotor 16 ist über eine hier nicht dargestellte Anordnung mit einer nichtlinearen Mechanik, z. B. einem Kniehebel einer Schubkurbel oder einer anderen mechanischen Kurvenscheibe, gekoppelt. Die Istposition xᵢₛₜ der nichtlinearen Mechanik wird mit Hilfe eines Gebers 17 erfasst und zurückgekoppelt. D.h., zu jedem Abtastzeitpunkt wird die Differenz zwischen dem Lagesollwert xₛₒₗₗ und dem Lageistwert xᵢₛₜ gebildet, um den Schleppfehler Δx zu berechnen.

Ein Lageregler 18 erzeugt aus dem Schleppfehler Δx einen Drehzahlsollwert nₛₒₗₗ. Ein der Lagereglung untergeordneter Drehzahlregler 19 berechnet schließlich aus der Abweichung des Drehzahlsollwertes nₛₒₗₗ und einer mittels eines Differenziators 19 aus dem Lageistwert xᵢₛₜ gewonnenen Istdrehzahl nᵢₛₜ eine Regeldifferenz der Drehzahl Δn. Aus dieser wird mit Hilfe des Drehzahlreglers 19 schließlich ein Solldrehmoment Mₛₒₗₗ bestimmt. Durch Multiplikation dieses Solldrehmomentes Mₛₒₗₗ mit einer Maschinenkonstante K_{T} des Elektromotors 16 kann schließlich ein Stromsollwert Iₛₒₗₗ berechnet werden, der von einem Stromrichter 12 in den Elektromotor 16 einzuprägen ist. Um dies zu gewährleisten, ist dem Drehzahlregelkreis ein Stromregelkreis untergeordnet. Am Ausgang des Stromrichters 12 wird der Iststrom Iᵢₛₜ gemessen und vom Sollstromwert Iₛₒₗₗ abgezogen. Die Regeldifferenz ΔI wird schließlich über einen Stromregler 20 zu einer Sollspannung Uₛₒₗₗ transformiert, die von dem Leistungsteil bzw. dem Stromrichter 12 als Klemmenspannung für den Elektromotor 16 erzeugt werden soll.

Der dargestellte Lageregelkreis 6, dessen Struktur aus dem Stand der Technik bekannt ist, kann durch Störgrößen, die beispielsweise von einer mechanischen Kurvenscheibe erzeugt werden und auf den Antriebsstrang wirken, gestört werden. Es kann hierdurch zu starken Schwingungen des Schleppfehlers Δx bis hin zu Instabilität kommen. Um die Genauigkeit des Lageregelkreises 6 zu verbessern, wird daher die Störgrößenaufschaltung 15 vorgesehen. Hierbei wird zunächst der Schleppfehler Δx gemessen. Dieses Messsignal 1 wird einem steilflankigen Tiefpassfilter 9 zugeführt. Durch diesen wird die Entstehung von Spiegelfrequenzen bei einer anschließenden Transformation des Messsignals 1 in den Frequenzbereich vermieden.

Mit Hilfe einer diskreten Fouriertransformation (DFT) 7 wird das gefilterte Messsignal 1 in seine Frequenzanteile f₀...fₙ zerlegt. Für jeden Frequenzanteil f₀...fₙ wird eine Amplitude A₀...Aₙ und ein Phasenwinkel ϕ₀...ϕₙ bestimmt. Anschließend wird in einem Optimierungsschritt 20 für jeden Phasenwinkel ϕ₀...ϕₙ ein weiterer Phasenwinkel ϕ_{add,0}...ϕ_{add,n} bestimmt, der auf die jeweiligen Phasenwinkel ϕ₀...ϕₙ aufaddiert werden muss, um eine möglichst effiziente Reduzierung des dynamischen Schleppfehlers Δx zu erreichen.

Im Anschluss werden in einem Verarbeitungsschritt 21 die einzelnen Frequenzanteile verarbeitet. D.h., sie werden
- - bewertet:: Für den Fall, dass die physikalische Größe des Eingangssignals der Anordnung nicht der des Ausgangssignals entspricht, muss eine Anpassung von Amplituden und Phasen (z.B. durch Differentiation) erfolgen.
- - gefiltert:: Falls der Anteil einer Frequenz an der Störgröße nur gering ist, kann der Einfluss dieser Frequenz auf den Schleppfehler Δx vernachlässigt werden. Diese Frequenz kann somit ignoriert werden.
- - begrenzt:: Um möglichen Schäden am Antriebssystem vorzubeugen, muss die maximale Amplitude und/oder Amplitudenänderung der einzelnen aufgeschalteten Spektralkomponenten begrenzt werden.
- - geprüft:: Die ermittelten Frequenzanteile f₀...fₙ der Störgröße werden auf Plausibilität geprüft, um zu verhindern, dass Spektralkomponenten aufgeschaltet werden, die durch Abtast- bzw. Transformationsfehler entstanden sind. Diese Prüfung kann auch mit Hilfe eines Streckenmodells durchgeführt werden, das es ermöglicht, die Auswirkung der Kompensationsschaltung auf die Strecke vorher zu simulieren. Ein solches Streckenmodell kann beispielsweise aus Messungen bei der Inbetriebnahme des Antriebes der Produktionsmaschine erzeugt werden.

Im Anschluss wird eine inverse diskrete Fouriertransformation (iDFT) durchgeführt, um das verarbeitete Signal zurück in den Zeitbereich zu transformieren. Man erhält auf diese Art und Weise ein Vorsteuersignal 5 in Form eines Zusatzsolldrehmomentes M_{add}. Dieses Zusatzsolldrehmoment M_{add} wird schließlich auf den Sollwert des Drehmomentes Mₛₒₗₗ aufaddiert und bewirkt die gewünschte Vorsteuerung.

## Patentansprüche

1. Verfahren zur Minimierung eines durch eine periodische Störgröße verursachten Schleppfehlers (Δx) eines Lageregelkreises (6) eines elektrischen Antriebes mit folgenden Verfahrensschritten:
- Messung einer mit der Störgröße beaufschlagten Messgröße (1),
- Bestimmung einer ersten Amplitude (A₀...Aₙ) und eines ersten Phasenwinkels (ϕ₀...ϕₙ) für zumindest einen Frequenzanteil (f₀...fₙ) der Störgröße,
- Bestimmung eines Vorsteuersignals (5), das bei dem Frequenzanteil (f₀...fₙ) eine zur ersten Amplitude (A₀...Aₙ) proportionale zweite Amplitude und einen bezüglich dem ersten Phasenwinkel (ϕ₀...ϕₙ) verschobenen zweiten Phasenwinkel aufweist derart, dass das Vorsteuersignal den Schleppfehler (Δx) reduziert, und
- Aufschalten des Vorsteuersignals (5) auf eine Sollgröße des Lageregelkreises (6).

2. Verfahren nach Anspruch 1,
wobei das Messsignal (1) insbesondere mittels einer Fouriertransformation (7) in den Frequenzbereich transformiert wird, um die erste Amplitude (A₀...Aₙ) und den ersten Phasenwinkel (ϕ₀...ϕₙ) zu bestimmen, und das Vorsteuersignal (5) in den Zeitbereich mittels einer inversen Fouriertransformation (8) transformiert wird, bevor es auf die Sollgröße des Lageregelkreises (6) aufgeschaltet wird.

3. Verfahren nach Anspruch 1 oder 2,
wobei das Messsignal (1) vor der Bestimmung der ersten Amplitude (A₀...Aₙ) und des ersten Phasenwinkels (ϕ₀...ϕₙ) mit einem Tiefpassfilter (9) gefiltert wird.

4. Verfahren nach einem der vorhergehenden Ansprüche,
wobei der Schleppfehler (Δx) als das Messsignal (1) verwendet wird.

5. Verfahren nach einem der vorhergehenden Ansprüche,
wobei das Vorsteuersignal (5) auf einen Drehmomentsollwert (Mₛₒₗₗ) des elektrischen Antriebes aufaddiert wird.

6. Verfahren nach einem der Ansprüche 1 bis 5,
wobei das Vorsteuersignal (5) auf einen Sollstrom (Iₛₒₗₗ) eines Stromrichters (12) des elektrischen Antriebes aufaddiert wird.

7. Verfahren nach einem der Ansprüche 1 bis 4,
wobei das Vorsteuersignal (5) auf eine Solldrehzahl (nₛₒₗₗ) des elektrischen Antriebes aufaddiert wird.

8. Verfahren nach einem der Ansprüche 1 bis 4,
wobei das Vorsteuersignal (5) auf einen Lagesollwert (xₛₒₗₗ) für eine zu regelnde Lage aufaddiert wird.

9. Verfahren nach einem der vorhergehenden Ansprüche,
wobei die zweite Amplitude und/oder eine Änderung der zweiten Amplitude begrenzt werden.

10. Verfahren nach einem der vorhergehenden Ansprüche,
wobei ein Startwert für das Vorsteuersignal (5) in einer Betriebsphase des elektrischen Antriebs bestimmt und gespeichert wird und wobei der gespeicherte Startwert bei einem Neustart des elektrischen Antriebs auf die Sollgröße des Lageregelkreises (6) aufgeschaltet wird.

11. Vorrichtung zur Minimierung eines durch eine periodische Störgröße verursachten Schleppfehlers (Δx) eines Lageregelkreises (6), wobei die Vorrichtung
- Mittel zur Messung einer mit der Störgröße beaufschlagten Messgröße (1),
- Mittel zur Bestimmung einer ersten Amplitude (A₀...Aₙ) und eines ersten Phasenwinkels (ϕ₀...ϕₙ) für zumindest einen Frequenzanteil (4) der Störgröße,
- Mittel zur Bestimmung eines Vorsteuersignals (5), das bei dem Frequenzanteil (4) eine zur ersten Amplitude (A₀...Aₙ) proportionale zweite Amplitude und einen bezüglich dem ersten Phasenwinkel (ϕ₀...ϕₙ) verschobenen zweiten Phasenwinkel aufweist derart, dass das Vorsteuersignal den Schleppfehler reduziert, und
- Mittel zum Aufschalten des Vorsteuersignals (5) auf eine Sollgröße des Lageregelkreises (6)
aufweist.

12. Vorrichtung nach Anspruch 11,
wobei die Vorrichtung
- Mittel zur Transformation des Messsignal (1) mittels einer Fouriertransformation (7) in den Frequenzbereich, um die erste Amplitude (A₀...Aₙ) und den ersten Phasenwinkel (ϕ₀...ϕₙ) zu bestimmen, und
- Mittel zu Transformation des Vorsteuersignals (5) in den Zeitbereich mittels einer inversen Fouriertransformation (8), bevor es auf die Sollgröße des Lageregelkreises (6) aufgeschaltet wird,
umfasst.

13. Vorrichtung nach Anspruch 11 oder 12,
wobei die Vorrichtung einen Tiefpassfilter (9) zum Filtern des Messsignals (1) vor der Bestimmung der ersten Amplitude (A₀...Aₙ) und des ersten Phasenwinkels (ϕ₀...ϕₙ) umfasst.

14. Vorrichtung nach einem der Ansprüche 11 bis 13,
wobei die Vorrichtung einen Begrenzer zur Begrenzung der zweiten Amplitude und/oder einer Änderung der zweiten Amplitude umfasst.

15. Vorrichtung nach einem der Ansprüche 11 bis 14,
wobei die Vorrichtung Mittel zur Bestimmung eines Startwertes für das Vorsteuersignal (5) in einer Betriebsphase des elektrischen Antriebs und einen Speicher für den Startwert aufweist und wobei die Vorrichtung dazu eingerichtet ist, den gespeicherten Startwert bei einem Neustart des elektrischen Antriebs auf die Sollgröße des Lageregelkreises (6) aufzuschalten.

16. Computerprogrammprodukt enthaltend Programmcodemittel zur Ausführung eines Verfahrens nach einem der Ansprüche 1 bis 11, wenn besagtes Computerprogrammprodukt auf einem Datenverarbeitungssystem ausgeführt wird.
